Europäisches Patentamt

European Patent Office

Office européen des brevets

(11) Veröffentlichungsnummer: **0 384 105**

**A1**

(12) EUROPÄISCHE PATENTANMELDUNG

(21) Anmeldenummer: 90100256.8

(51) Int. Cl.⁵: **B62D 1/26**

(22) Anmeldetag: 08.01.90

(30) Priorität: 22.02.89 DE 3905446
24.06.89 DE 3920842

(43) Veröffentlichungstag der Anmeldung:
29.08.90 Patentblatt 90/35

(84) Benannte Vertragsstaaten:
DE FR GB IT

(71) Anmelder: MAN TECHNOLOGIE
AKTIENGESELLSCHAFT
Dachauer Strasse 667 Postfach 50 04 26
D-8000 München 50(DE)

(72) Erfinder: Richter, Richard, Dipl.-Ing.
St. Ottilien-Strasse 20
D-8911 Gresing(DE)
Erfinder: Dreher, Gunther, Dipl.-Ing.
Überlinger Weg 8
D-8000 München 60(DE)
Erfinder: Hörmann, Rudolf
Am Speckfeld 15
D-8060 Dachau(DE)
Erfinder: Elser, Dieter, Dipl.-Ing. (FH)
Jägerstrasse 10
D-7087 Esslingen(DE)

(54) Spurführungseinrichtung für gummibereifte Fahrzeuge.

(57) Die Erfindung betrifft eine Spurführungseinrichtung für ein auf einer Trasse einseitig entlang einer von Lücken (8 bzw. 9) definierter Breite unterbrochener Spurführungsleitschiene (4 bzw. 5) durch Tastrollen hochgenau führbares, gummibereiftes Fahrzeug, das in beiden Richtungen - vorwärts, rückwärts -mit vergleichbaren Verhältnissen betreibbar ist und eine gelenkte Vorder- und Hinterachse (13 bzw. 14) hat. Die Spurführungseinrichtung stellt eine exakte Lenkung des Fahrzeuges (6) auch beim Passieren der Lücken in der Spurführungsleitschiene sicher, und zwar durch die Kombination folgender Merkmale, nämlich,

a) jedem gelenkten Rad (15, 16, 17, 18) sind zwei Tastrollen (15a, 15b; 16a, 16b; 17a, 17b; 18a, 18b) zugeordnet, die in verschiedener Weise am Fahrzeug angeordnet sein können, jedoch immer in einem gegenseitigen Abstand hintereinander, der größer als die Breite der Lücken (8, 9) in der Spurführungsleitschiene (4 bzw. 5) ist,

b) eine Einrichtung zur Koordination der notwendigen gegensinnigen oder gleichsinnigen Lenkbewegungen der Räder beider gelenkter Achsen (13, 14), und

c) eine Einrichtung, mit der an jeder gelenkten Achse (13, 14) ein definiertes ‚Lenkmoment zur Hinführung der Räder in Richtung der abzutastenden Spurführungsleitschiene (4 bzw. 5) erzeugbar ist.

EP 0 384 105 A1

Fig. 7

Die Erfindung betrifft Spurführungseinrichtungen für ein auf einer Trasse einseitig entlang einer von Lücken definierter Breite unterbrochenen Spurführungsleitschiene durch Tastrollen hochgenau führbares, gummibereiftes Fahrzeug, das in beiden Richtungen - vorwärts, rückwärts - mit vergleichbaren Verhältnissen betreibbar ist und eine jeweils gelenkte Vorder- und Hinterachse hat.

Es handelt sich bei einer solchen Spurführung um einen Spezialfall, der durch den Charakter und die Einsatzeigenschaften des Fahrzeuges bedingt ist. Dadurch, daß das Fahrzeug in beiden Richtungen unter gleichen Verhältnissen, d.h. gleichen Geschwindigkeiten vorwärts und rückwärts betrieben werden soll und daher sowohl Vorder- als auch Hinterachse gelenkt sein müssen, ergeben sich wesentlich schwieriger zu lösende Probleme als bei einer normalen Spurführung, beispielsweise eines Omnibusses, wie aus der EP 0 111 258 bekannt. Insbesondere tritt bei solchen Spurführungen regelmäßig nicht jenes Problem auf, daß die Spurführungsleitschiene Lücken aufweist, die passiert werden müßten. Im Omnibusspurführungsbetrieb kommen nur ununterbrochene Leitschienen zur Anwendung.

Es ist daher Aufgabe der Erfindung, exakt auf den eingangs definierten Anwendungsfall abgestellte Spurführungseinrichtungen zu schaffen, mit denen ein Fahrzeug in jedem Einsatzfall auch beim Passieren von Lücken definierter Breite in den Spurführungsleitschienen sicher und exakt längs der vorgegebenen Trasse führbar ist.

Diese Aufgabe ist durch Spurführungseinrichtungen mit in den selbständigen Ansprüchen 1, 17 und 20 angegebenen Kombinationsmerkmalen gelöst. Diese Lösungen bestehen im Prinzip darin, daß

a) jedem gelenktem Rad zwei Tastrollen zugeordnet sind, die in verschiedener leise am Fahrzeug angeordnet sein können, jedoch immer in einem gegenseitigen Abstand hintereinander, der größer als die Breite der Lücken in der Spurführungsleitschiene ist, außerdem

b) eine Einrichtung zur Koordination der notwendigen gegensinnigen oder gleichsinnigen Lenkbewegungen der Räder beider gelenkter Achsen vorgesehen ist, und schließlich noch

c) eine Einrichtung vorgesehen ist, mit der an jeder gelenkten Achse ein definiertes Lenkmoment zur Hinführung der Räder in Richtung der abzutastenden Spurführungsleitschiene erzeugbar ist.

Die Maßnahmen gemäß Teilmerkmal a) schaffen die Voraussetzung dafür, daß überhaupt mit Lücken behaftete Spurführungsleitschienen als Führungsorgan herangezogen werden können. Die Maßnahmen bzw. Einrichtungen gemäß den Merkmalen b) und c) sorgen dafür, daß das Fahrzeug sowohl im Bereich der in Fahrtrichtung vorderen als auch hinteren Achse exakt entlang der Trasse geführt wird, wobei wirksam verhinderbar ist, daß im Bereich von die Spurführungsleitschiene unterbrechenden Lücken Fehlführungszustände antreten.

Einzelheiten dieser erfindungsgemäßen Lösungen sind in den abhängigen Unteransprüchen gekennzeichnet. Nachstehend sind die erfindungsgemäßen Lösungen anhand mehrerer in der Zeichnung dargestellter Ausführungsbeispiele näher erläutert. In der Zeichnung zeigen:

Fig. 1 einen Querschnitt durch eine Fahrbahn (Trasse) mit im Spurführungs-Betrieb dargestellten Fahrzeugen,

Fig. 2 in verkleinerter Form einen im Spurführungs-Betrieb zum Einsatz kommenden Fahrzeugtyp,

Fig. 3 in stark schematisierter Form das Grundprinzip einer am spurführbaren Fahrzeug zur Anwendung kommenden Spurführungseinrichtung,

Fig. 4 eine Variante zur Spurführungseinrichtung gemäß Fig. 3,

Fig. 5 eine weitere Variante zur Spurführungseinrichtung gemäß Fig. 3,

Fig. 6 eine regel- und steuerungstechnisch weiter ausgebaute Ausführungsform der Spurführungseinrichtung,

Fig. 7 eine weitere Variante einer Spurführungseinrichtung,

Fig. 8 stark schematisiert die verkehrsmäßige Führung des Fahrzeugs in engen linken und rechten Kurven mittels der gegebenen Spurführungseinrichtung, und

Fig. 9 und 10 je eine weitere Ausführungsform einer Spurführungseinrichtung.

In den Figuren sind gleiche bzw. einander entsprechende Teile mit gleichen Bezugszeichen angezogen.

Bei der Erfindung geht es darum, gummibereifte Fahrzeuge in beiden Richtungen (vorwärts, rückwärts) auf einer Fahrbahn (Trasse) sicher und exakt entlang einer Spurführungsleitschiene, die Unterbrechungen bestimmter Länge aufweist und sowohl auf der rechten als auch linken Fahrbahnseite verlegt sein kann, zu führen, beispielsweise auch so, daß ein Begegnungsverkehr der Fahrzeuge auf der selben Fahrbahn möglich und dabei beim Aneinandervorbeifahren zwischen den Fahrzeugen ein geringer Sicherheitsabstand einhaltbar ist.

Die besagten Fahrzeuge kommen z.B. als Spezial-Omnibusse oder andere Spezialfahrzeuge, in Flughäfen, Hochregallagern, großen Fertigungsfabriken, Containerumschlagplätzen, in Tunnels oder dergleichen, für Lastenverkehr, Service-, Rettungs-oder dergleichen Dienste zur Anwendung.

Die Spurführungsleitschienen sind in solchen Anwendungsfällen in Abständen, die größer als die Fahrzeuglänge ist, von Lükken infolge abzweigender Querstraßen, Querstollen, Gassen und dergleichen unterbrochen.

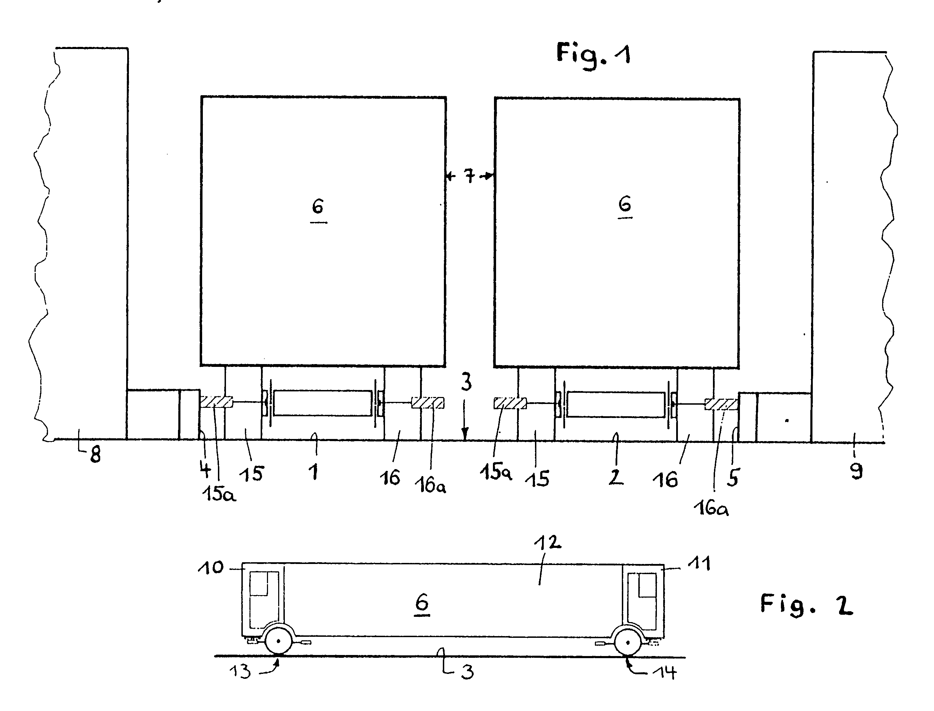

In Fig. 1 ist als Beispiel für einen Spurführungsfall eine zwei Fahrspuren 1, 2 aufweisende Fahrbahn 3 mit beiderseits längs derselben verlaufenden Spurführungsleitschienen 4, 5 dargestellt. Längs dieser Spurführungsleitschienen 4, 5 sind Fahrzeuge 6 mittels an diesen gegebenen Spurführungseinrichtungen exakt führbar. Diese Spurführung ist so genau wirkend, daß im dargestellten Begegnungs-Spurführungsbetrieb ein in Fig. 1 mit 7 bezeichneter Minimalabstand von 10 bis 20 cm zwischen den Fahrzeugen 6 trotz der von letzteren vor diesen hergeschobenen Luftstaupolster bzw. im Heckbereich erzeugten Unterdruckzonen einhaltbar ist. Die die Spurführungsleitschiene 4 bzw. 5 unterbrechenden Lücken, resultierend aus Querstraßen, Querstollen, Gassen oder dergleichen, sind in den Figuren (soweit dargestellt) mit 8 bzw. 9 bezeichnet.

Bei den zum Einsatz kommenden Fahrzeugen handelt es sich beispielsweise um solche, die - wie aus Fig. 2 ersichtlich -vorn und hinten ein Fahrerhaus 10 bzw. 11 mit dazwischen gegebenem·Lade- bzw. Tragbereich 12 und eine Antriebseinrichtung aufweisen, die einen Betrieb des Fahrzeugs 6 in beiden Richtungen (vorwärts, rückwärts) unter gleichen Antriebsbedingungen ermöglicht. Für den Betrieb eines solchen Fahrzeugs 6 ist nur ein Fahrer erforderlich, der je nach Fahrtrichtung entweder im Fahrerhaus 10 oder 11 sitzt. Die Fahrzeuge 6 haben vorn und hinten je eine Achse 13 bzw. 14 mit lenkbaren Rädern 15, 16 bzw. 17, 18, die mit ihren schematisiert angedeuteten Achsschenkeln 15' bzw. 16' bzw. 17' bzw. 18' um eine zugehörige Schwenkachse 15'' bzw. 16'' bzw. 17'' bzw. 18'' verschwenkbar sind. An jedem Achsschenkel ist ein übliches Lenkgestänge 19 bzw. 20 angelenkt, das getrieblich in nicht dargestellter Weise mit dem vom Fahrer im jeweils zugeordneten Fahrerhaus 10 bzw. 11 handhabbaren Lenkrad verbunden ist. Die Lenkhebel 19' und 19'' sind jeweils fest mit den zugehörigen Achsschenkeln 15' bzw. 16' bzw. 17' bzw. 18' verbunden.

Nachstehend werden detailliert die verschiedenen Ausführungsformen einer Spurführungseinrichtung beschrieben, die dazu dient, ein Fahrzeug 6 während des Spurführungsbetriebes selbsttätig sowohl im Bereich der vorderen Achse 13 als auch der hinteren Achse 14 sicher entlang einer Spurführungsleitschiene 4 bzw. 5 zu führen, aber bei Notwendigkeit auch einen raschen Fahrbahnwechsel mit sicherer Anstellung an die gegenüberliegende Spurführungsleitschiene 5 bzw. 4 zu gewährleisten. Außerdem ist die Spurführungseinrichtung generell so aufgebaut, daß mit dem Fahrzeug 6 jederzeit auch alle erforderlichen Fahrmanöver losgelöst von der Spurführungsleitschiene 4, 5 durchführbar sind.

Jedem gelenkten Rad 15, 16, 17, 18 ist grundsätzlich ein Paar von Tastrollen 15a, 15b bzw. 16a, 16b bzw. 17a, 17b bzw. 18a, 18b zugeordnet. Diese beiden, mit Index a, b gekennzeichneten Tastrollen eines Tastrollen-Paares sind am Fahrzeug in Längsrichtung gesehen hintereinander um ein solches Maß voneinander beabstandet, das etwas größer als die Breite einer Lücke 8 bzw. 9 in der Spurführungsleitschiene 4 bzw. 5 im Bereich einer Quergasse oder dergleichen ist.

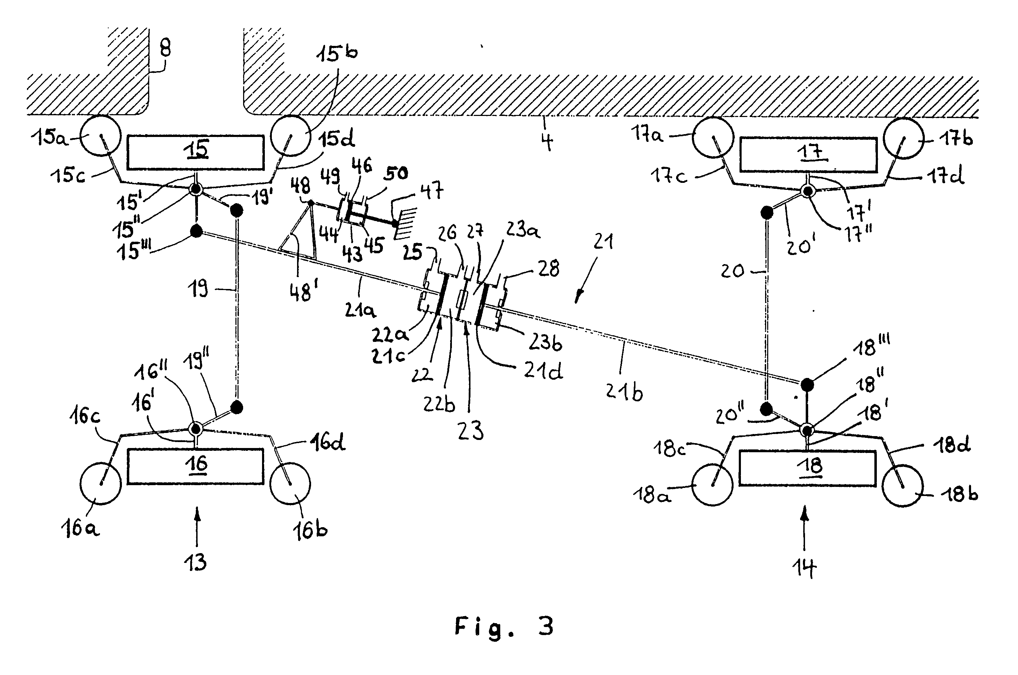

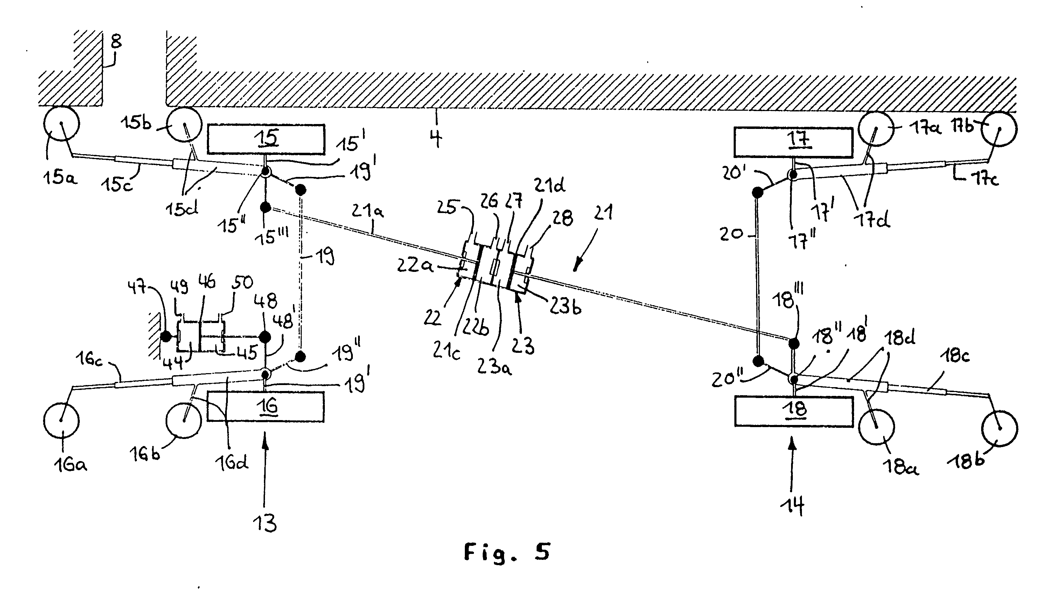

Jede Tastrolle ist im Fall der Beispiele gemäß Fig. 3 bis 8 am freien äußeren Ende eines Tastarmes 15c, 15d bzw. 16c, 16d bzw. 17c, 17d bzw. 18c, 18d drehbar gelagert angeordnet, der zwar sehr stabil gebaut ist, trotzdem jedoch eine definierte Elastizität aufweist und in fester Verbindung mit dem zugehörigen Achsschenkel 15' bzw. 16' bzw. 17' bzw. 18' steht. Die Anordnung der beiden, mit Index a, b gekennzeichneten Tastrollen ist dabei so, daß sie die Außenseite des zugehörigen Rades 15 bzw. 16 bzw. 17 bzw. 18 um ein geringes Maß von beispielsweise 5 Zentimeter überragen. Die beiden Tastrollen eines Tastrollen-Paares können, wie aus Fig. 3, 4, 6, 7, 9 und 10 ersichtlich, jeweils vor und hinter dem zugehörigen Rad 15 bzw. 16 bzw. 17 bzw. 18, oder - wie aus Fig. 5 ersichtlich - jeweils in Fahrtrichtung vor dem zugehörigen Rad 15 bzw. 16 bzw. 17 bzw. 18 angeordnet sein. Im Gegensatz zu den Tastarmen gemäß den Ausführungsbeispielen von Fig. 3, 4 und 6 sind beim Ausführungsbeispiel gemäß Fig. 5 die jeweils weiter vom zugehörigen Rad beabstandeten Tastrollen 15a, 16a, 17b, 18b an Tastarmen gelagert, von denen jeder mit dem die jeweils benachbarte Tastrolle des Tastrollen-Paares tragenden Tastarm fest verbunden ist und einen Teleskopkolbenzylinder aufweist, der es ermöglicht, die an ihm angeordnete Tastrolle einzuziehen, wenn sie beispielsweise bei nicht spurgeführter Fahrt nicht benötigt wird.

Weiteres Teil der Spurführungseinrichtung ist im Fall der Ausführungsbeispiele gemäß Fig. 3 bis 6 ein längenverstellbares Verbindungsgestänge 21 zwischen den beiden gelenkten Achsen 13, 14 zur Koordination der gegensinnigen oder gleichsinnigen Lenkbewegung der Räder 15, 16, 17, 18 beider Achsen. Im einfachsten Fall (siehe Fig. 3, 5 und 6) besteht das Verbindungsgestänge 21 aus zwei zueinander fluchtenden geraden Stangen 21a, 21b, die eine vorzugsweise diagonale Verbindung zwischen einem Gelenk 15''', das am äußeren Ende eines am Achsschenkel 15' des Rades 15 gegebenen Hebels angeordnet ist, und einem Gelenk 18''' bildet, das am äußeren Ende eines fest am Achsschenkel 18' des Rades 18 gegebenen Hebels angeordnet ist. Die beiden Stangen 21a, 21b sind an ihren einander zugewandten Enden mit innerhalb von hydraulischen Druckzylindern 22, 23 je zwei Druckräume 22a, 22b bzw. 23a, 23b voneinander trennenden Kolben 21c, 21d bestückt. Diese Kolben 21c, 21d mit ihren Druckzylindern 22, 23 sind Teil einer Einrichtung zur Änderung der wirksamen Länge des Verbindungsgestänges 21. Diese Einrichtung besteht des weiteren aus einem hydraulischen Steuerblock 24, Verbindungsleitungen 25, 26, 27, 28 zwischen letzterem und den Druckräumen 22a, 22b, 23a, 23b, sowie einer Druckmittelversorgungseinrichtung 29.

Mittels interner Ventileinrichtungen sind durch den Steuerblock 24 die Druckräume 22a und 22b einerseits sowie 23a und 23b andererseits gezielt so druckbelastbar bzw. zum Vorratstank 30 hin entlastbar, daß sich eine gewünschte Verlängerung oder Verkürzung des Verbindungsgestänges 21 ergibt. Die Steuerung dieser Be- und Entlastungsvorgänge mit anschließender Absperrung der Druckräume erfolgt durch entsprechende Befehle, die von einer elektronischen Regel- und Steuereinrichtung 31 automatisch gesteuert in Abhängigkeit von weiter hinten noch näher erläuterten Bedingungen oder einem vom Fahrer im jeweiligen Fahrerhaus betätigbaren Gebermechanismus an den Steuerblock 24 abgegeben werden.

Diese Einrichtung zur Längenänderung des Verbindungsgestänges 21 dient somit dazu, die Lenkkinematik der Räder 15, 16, 17, 18 der beiden gelenkten Achsen 13, 14 den Gegebenheiten der Trasse für Geradeaus- oder Kurvenfahrt, oder sich ändernden Fahrsituationen, beispielsweise einen notwendigen Fahrspurwechsel, durch Parallelversatz anzupassen, dergestalt, daß das Fahrzeug 6 im Bereich beider Achsen 13, 14 zur abzutastenden Spurführungsleitschiene 4 bzw. 5 hingelenkt wird.

Wenn beide Kolben 21c, 21d in ihrem jeweiligen Druckzylinder 22 bzw. 23 sich in der Mitte des zwischen je zwei Anschlägen gegebenen Hubweges befinden und in dieser Lage hydraulisch verblockt sind, dann hat das Verbindungsgestänge 21; 21a, 21b jene Länge, in der die Räder 15, 16, 17, 18 beider Achsen 13, 14 so eingestellt sind, daß das Fahrzeug 6 exakt geradeaus läuft. Bleibt das Verbindungsgestänge in dieser "Null-Stellung" verblockt, so würden die Achsen 13,14 bei jeder Lenkbewegung der in Fahrtrichtung vorwärts gesehen vorderen Räder den bekannten Bedingungen einer Allrad-Lenkung gehorchen, d.h., wird beispielsweise das Rad 15 von der Spurführungsleitschiene 4 weggelenkt, so wird das Rad 17 mit gleichwinkligem Lenkeinschlag zur Spurführungsleitschiene hingelenkt. Um diese gegensinnige Zwangslenkung aufzuheben, und um die Räder jeder Achse 13 bzw. 14 in der gewünschten Weise in Bezug auf die Spurführungsleitschiene 4 bzw. 5 einzustellen, muß die wirksame Länge des Verbindungsgestänges 21, 21a, 21b verändert, d.h. verlängert oder verkürzt werden. Durch maximale Verlängerung bzw. maximale Verkürzung des Verbindungsgestänges 21; 21a, 21b ist der Fall herbeiführbar, daß die Räder 15, 16 der einen Achse 13 in gleichsinniger Weise und mit gleichem Winkel eingeschlagen werden wie die Räder 17, 18 der anderen Achse 14. Diese Parallel-Verschwenkung der Räder, auch Paßgang genannt, ist insbesondere dann erwünscht, wenn ein Fahrzeug 6 einen raschen Fahrspurwechsel vornehmen soll bzw. muß, d.h., von der einen Spurführungsleitschiene 4 beispielsweise weggelenkt und anschließend an der gegenüberliegenden Spurführungsleitschiene 5 weitergeführt werden soll bzw. muß.

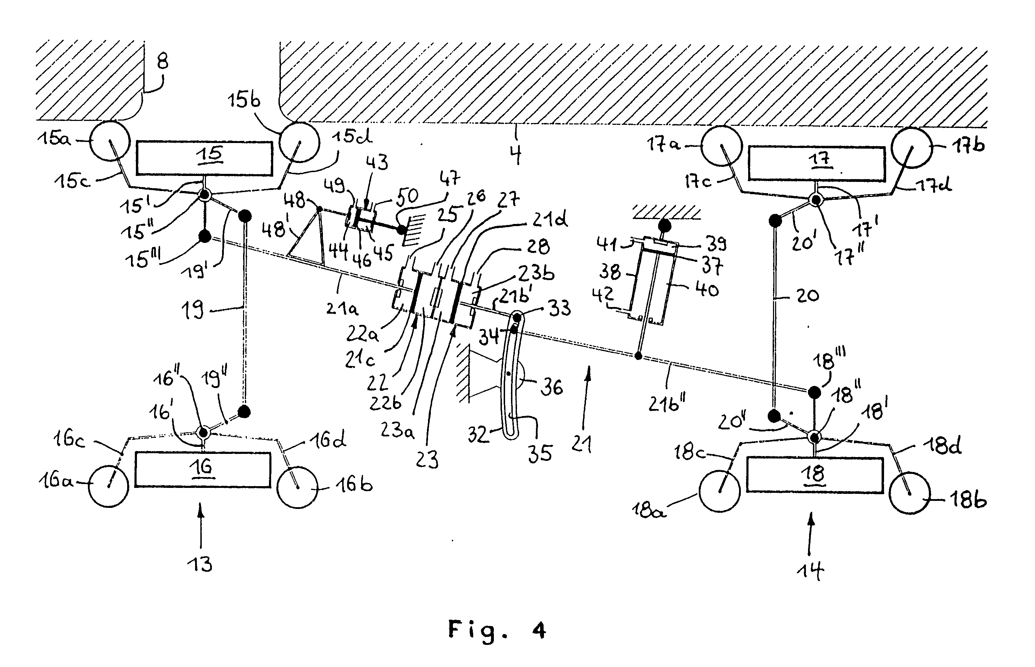

Um im Falle des Paßganges sehr große Lenkeinschläge der Räder 15, 16, 17, 18 zu ermöglichen, muß die wirksame Länge des Verbindungsgestänges 21; 21a, 21b auch um ein entsprechend großes Maß verlängert oder verkürzt werden können. Dieses Ziel kann durch sehr langhubig ausgelegte Kolben-/Druckzylinder-Einheiten 21c, 22 bzw. 21d, 23 realisiert werden. Sofern diese langen Kolben-/ Druckzylinder-Einheiten nicht realisierbar sind, kann man sich dadurch behelfen, daß - wie aus Fig. 4 ersichtlich - in eine der Stangen 21a oder 21b Mittel eingebaut sind, welche die Zuordnung der Lenkbewegungen der Räder beider Achsen 13, 14 einstellbar machen. Das heißt, es kann zwischen der Einstellung für Allradlenkung und Paßgang- bzw. Parallel-Lenkung und für Nichtlenkung der zweiten Achse gewählt werden. Im dargestellten Beispiel ist hierzu die Stange 21b in zwei Teile 21b', 21b" unterteilt, die beide an einer Schwinghebelkulisse 32 angelenkt sind, und zwar das Stangen-Teil 21b' in einem einenendes der Schwinghebelkulisse 32 gegebenen Drehgelenk 33 und das andere Stangen-Teil 21b" mit einem Kulissenstein bzw. einer Kulissenrolle 34 in einer längsschlitzförmigen Kulisse 35, die sich längs der selbst etwa in der Mitte ihrer Längsausdrehung schwenkbar an einem fahrgestellfesten Lager 36 angelenkten Schwinghebelkulisse 32 erstreckt. Außerdem greift am Stangenteil 21b" eine Verstelleinrichtung, hier in Form einer Kolben-/Druckzylinder-Einheit an, die einenendes fahrgestellfest, andernendes am Stangenteil 21b" jeweils gelenkig angeschlossen ist, wobei der Kolben 37 im Druckzylinder 38 zwei Druckräume 39, 40 voneinander trennt, die zur gezielten Be- und Entlastung bzw. Absperrung über Druckleitungen 41, 42 an eine hydraulische Steuereinheit angeschlossen sind. Letztere kann mit dem Steuerblock 24 zu einem einheitlichen Aggregat vereinigt sein. Befindet sich der Kulissenstein 34 in der in Fig. 4 gezeichneten Stellung, dann ergeben sich bei entsprechend gewählten Hebellängen die gleichen Verhältnisse wie im Fall gemäß Fig. 3. Befindet sich der Kulissenstein 34 demgegenüber aber am anderen Ende der Kulisse 35, dann besitzt das Verbindungsgestänge 21; 21a, 21b′, 21b″, 32 die Eigenschaften einer Parallellenkung. Befindet sich der Kulissenstein 34 exakt über dem Drehpunkt 36 der Schwinghebel-Kulisse 32, dann ist das Stangenteil 21b″ gestellfest verblockt, in welchem Fall dann Änderungen in den Zuständen der Kolben-/ Druckzylinder-Einheiten 21c, 22 bzw. 21d, 23 lediglich Änderungen in der Lenkkinematik der Räder 15, 16 der Achse 13 hervorrufen.

Weiteres Bestandteil der Spurführungseinrichtung ist eine Einrichtung zur Erzeugung eines definierten Lenkmomentes, mit dem die gelenkten Räder 15, 16, 17, 18 der beiden Achsen 13, 14 an die jeweils zur Führung herangezogene Spurführungsleitschiene 4 bzw. 5 hin gelenkt werden. Eine solche Einrichtung ist beispielsweise so aufgebaut, wie jene aus der EP 0 111 258 bekannte, die dort in Verbindung mit der Spurführung eines Omnibusses zur Anwendung kam.

Die besagte Einrichtung besteht aus einer Kolben-/Druckzylinder-Einheit, mit einem Druckzylinder 43 und einem in letzterem zwei Druckräume 44, 45 voneinander trennenden Kolben 46, wobei eines der beiden Teile 43, 46 an einem gestellfesten Lager 47 und das andere der beiden Teile 43, 46 an einem Lager 48 gelenkig angeschlossen ist, das an einem bewegungsmäßig fest an einem der vier Achsschenkel 15′ bzw. 16′ bzw. 17′ bzw. 18′ angeordneten bzw. angelenkten Organ 48′, wie Hebel, Pfeiler oder dergleichen, gegeben ist. Jeder der beiden Druckräume 44, 45 ist über Druckleitungen 49, 50 gezielt von einer elektrohydraulischen Steuereinrichtung 51 her druckbe- und entlastbar, um die gewünschte Anpreßkraft der Tastrollen an die Spurführungsleitschiene, sobald Anlagekontakt besteht, herzustellen. Die Steuereinrichtung 51 ist ebenfalls an eine Druckmittelversorgung, insbesondere an die gleiche (29) wie der Steuerblock 24, sowie zur Druckentlastung an den Versorgungstank 30 angeschlossen. Die Steuereinrichtung 51 kann ihre Steuerbefehle vom Fahrer durch eine im Fahrerhaus 10, 11 gegebene oder von dort aus betätigbare und überwachbare Einrichtung bekommen; vorzugweise erhält die Steuereinrichtung 51 ihre Steuerbefehle jedoch ebenfalls von der elektronischen Regel- und Steuerrichtung 31. Die Anpreßkraft für die Tastrollen, welche ein Maß für das aufgebrachte Lenkmoment ist, kann dabei im einfachsten Fall auf einen Festwert eingestellt sein.

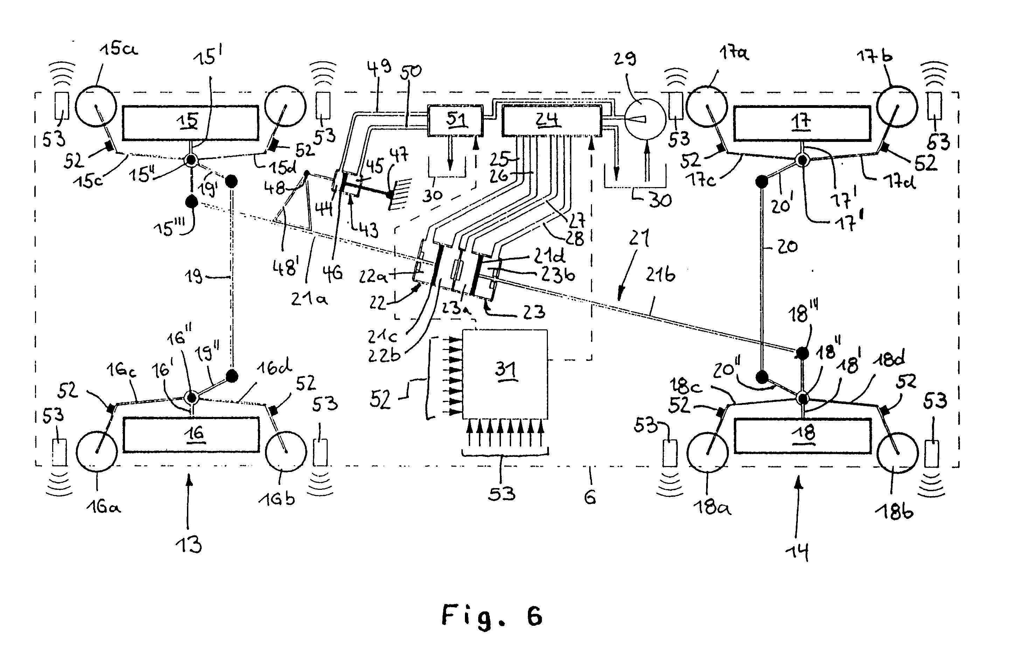

Regelungstechnisch aufwendiger ist die Ausführung gemäß Fig. 6. Dabei sind an jedem Tastarm 15c, 15d, 16c, 16d, 17c, 17d, 18c, 18d an einem für die Meßwerterfassung günstigen bzw. sensiblen Bereich Meßfühler, zum Beispiel Dehnungsmeßstreifen 52′ angeordnet, die die im jeweiligen Tastarm wirkende Beanspruchung erfassen und über nicht dargestellte Signalleitungen an die elektronische Regel- und Steuereinrichtung 31 melden. Alternativ zu dieser Kraftmessung oder auch zusätzlich zu dieser kann an jeder Tastrolle ein Drehzahlsensor vorgesehen sein, welche Drehzahlsensoren durch die erfaßte Drehzahl die Zustände "Rolle in oder außer Abtastkontakt mit Spurführungsleitschiene" erkennen und ebenfalls an die elektronische Regel- und Steuereinrichtung 31 melden.

Diese Abtastzustandserfassung mittels besagter Drehzahlsensoren kann für eine Minimalregelung bereits genügen, wobei die jeweiligen Istzustände dem Fahrer im Fahrerhaus 10, 11 durch geeignete Anzeigen bekannt gegeben werden.

Im Fall des Beispiels gemäß Fig. 6 sind als weitere Teile der Spurführungseinrichtung jeder Tastrolle 15a, 15b; 16a, 16b, 17a, 17b, 18a, 18b ein benachbart zu dieser fest am Fahrzeug angeordneter Abstandsmeßfühler 53 zugeordnet, welche Abstandsmeßfühler ebenfalls über nicht dargestellte Signalleitungen mit der elektronischen Regel- und Steuereinrichtung 31 verbunden sind.

Diese Abstandsmeßfühler 53 dienen hauptsächlich dazu, das Passieren einer Lücke 8 bzw. 9 in der Spurführungsleitschiene 4 bzw. 5 zu erfassen und zu melden, so daß beim Passieren eines solchen Bereiches ein Nachregeln der Lenkung unterbleibt und die Regelung der Anpreßkraft bzw. des Lenkmomentes erst wieder einsetzt, wenn die betreffende Tastrolle wieder in Kontakt mit dem anschließenden Teil der Spurführungsleitschiene 4 bzw. 5 gekommen ist.

Die elektronische Regel- und Steuereinrichtug 31 ist vorzugsweise als Rechnersystem aufgebaut mit der üblichen Hardware, bestehend aus Eingabe- und Ausgabeeinheiten, Meßsignalwandlerstufen, Meßsignalaufbereitungsstufen, Programmspeicher, Daten- bzw. Arbeitsspeicher, Ausgangssignalverstärkerstufen sowie einem zentralen Mikroprozessor (CPU), welche Baugruppen über die üblichen Datenübertragungswege (BUS-Systeme) miteinander verknüpft sind.

Die Regelung kann beispielsweise so sein, daß die Anpreßkraft der Tastrollen mit zunehmender Geschwindigkeit des Fahrzeuges und/oder dann erhöht wird, wenn zwei Fahrzeuge im Begegnungsverkehr aneinander vorbeifahren müssen. Die hierfür erforderlichen Steuerungsdaten sind im Daten- bzw. Arbeitsspeicher abgespeichert. Verarbeitet werden diese Daten zusammen mit den von den Sensoren 52, 53, sowie weiteren Gebern wie Geschwindigkeitsgeber, Staudruckmeßsensoren und dergleichen Sensoren gemeldeten Betriebszustandsistwerten per im Programmspeicher abgespeichertem Programm. Als Ergebnis werden über elektrische Befehlsleitungen von der elektronischen Regel- und Steuereinrichtung 31 Steuerbefehle an die angeschlossenen Einrichtungen, nämlich den Steuerblock 24 und die Steuereinrichtung 51 ausgeben, mit denen dann gezielt die notwendigen Steuerbewegungen zur Verstellung des jeweils geführten Rades ausgelöst werden, deren Ausführung über eine entsprechende Druckbeaufschlagung der Kolben-/Druckzylinder-Einheit 43, 46 und/oder Kolben-/Druckzylinder-Einheiten 21c, 22 bzw. 21d, 23 und/oder die Kolben-/Druckzylinder-Einheit 37, 38 erfolgt.

Sofern ein Fahrspurwechsel durchzuführen ist, wird dieser vom Fahrer oder einem beispielsweise in die Fahrbahn eingelassenen Befehlsgeber ausgelöst und der elektronischen Regel- und Steuereinrichtung 31 übermittelt. Diese veranlaßt dann die Aufhebung der Anpreßkraftregelung, die Loslösung des Fahrzeuges 6 von der bisherigen Spurführungsleitschiene, die Einstellung der Räder 15, 16, 17, 18 in gleichsinniger Weise (Paßgang) über die vorstehend erwähnten Kolben-/Zylinder-Einheiten 21c, 22 bzw. 21d, 23 bzw. 37, 38, und dann, nach erster Kontaktaufnahme mit der ersten Tastrolle an der gegenüberliegenden Spurführungsleitschiene eine gezielte Zustellung des Fahrzeuges 6 in Bezug auf letztere sowohl lagemäßig als auch kräftemäßig unter entsprechender Befehlsgabe an die die Anpreßkraft bzw. das Lenkmoment erzeugenden Organe.

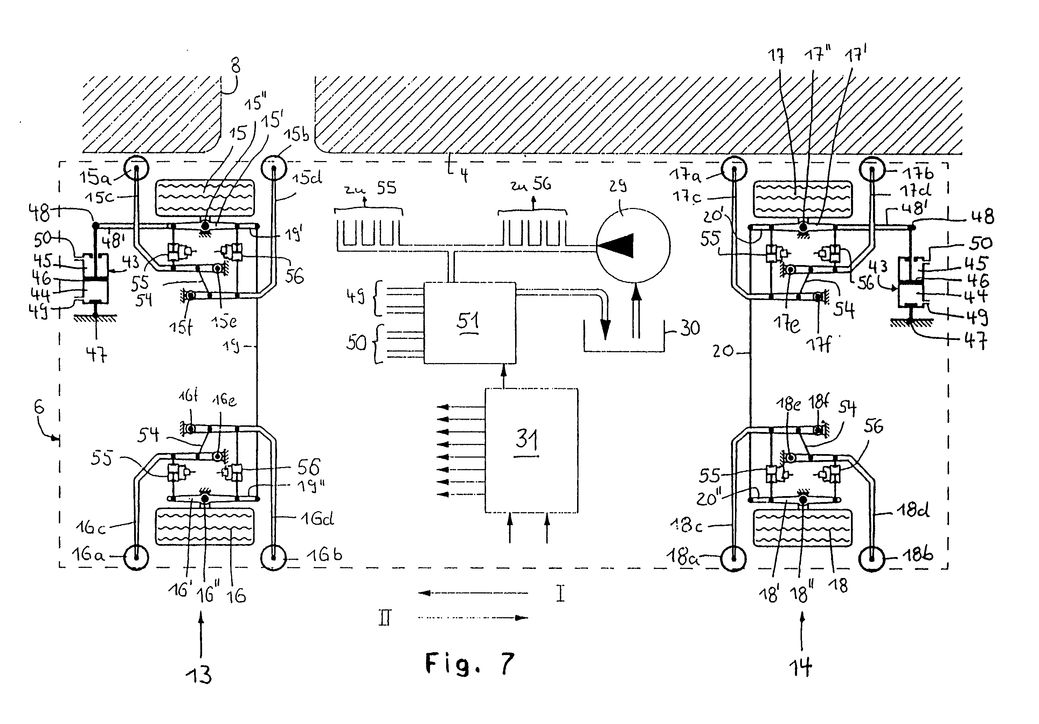

Im Fall des Ausführungsbeispiels gemäß Fig. 7 wird ein anderer Lösungsweg als im Fall der Beispiele gemäß Fig. 3 bis 6 beschritten. Im Fall gemäß Fig. 7 wird eine Lösung angegeben, die ohne die mechanische bzw. hydro-mechanische Kopplung der beiden gelenkten Achsen 13, 14 mittels des Verbindungsgestänges 21 auskommt, dessen Funktion aber durch andere Mittel bereitstellt.

Im Beispiel gemäß Fig. 7 sind die beiden Tastarme 15c, 15d bzw. 16c, 16d bzw. 17c, 17d bzw. 18c, 18d je Rad 15 bzw. 16 bzw. 17 bzw. 18 nicht direkt sondern nur indirekt am jeweiligen Achsschenkel angeordnet, außerdem nach Art eines Winkelhebels ausgebildet. Je Tastarm erstreckt sich dabei dessen einer Armteil in Fahrtrichtung gesehen vor bzw. hinter dem zu lenkenden Rad senkrecht bzw. schräg zur Spurführungsleitschiene 4 bzw. 5, während der andere, hierzu abgewinkelte Armteil das betreffende Rad hintergreifend sich hinter dem Achsschenkel 15′ bzw. 16′ bzw. 17′ bzw. 18′ desselben beabstandet von diesen und etwa quer zur Radachse verlaufend und so erstreckt, daß ein gewisser Abstand zum benachbarten Armteil des anderen Tastarmes gegeben ist. Jeder der beiden je Rad vorgesehenen Tastarme 15c, 15d bzw. 16c, 16d bzw. 17c, 17d bzw. 18c, 18d ist an seinem inneren Ende beweglich an einem fahrgestellseitigen Gelenk 15e, 15f bzw. 16e, 16f bzw. 17e, 17f bzw. 18e, 18f angelenkt und außerdem im Bereich seines abgewinkelten inneren Armteiles durch einen Verbindungshebel 54 gelenkig am benachbarten Armteil des anderen Tastarmes angekoppelt. Damit ist sichergestellt, daß jeweils eine vorzeichenrichtige Lenkbewegung am zugehörigen Rad herbeigeführt wird. Die Verbindung zwischen den beiden Tastarmen je Rad und den zugehörigen Achsschenkeln 15′ bzw. 16′ bzw. 17′ bzw. 18′ wird durch Kolben-/Druckzylinder-Einheiten 55 bzw. 56 hergestellt, die sich etwa parallel zur Radachse jeweils zwischen Achsschenkel und zugehörigen, das Rad hintergreifenden Armteil des Tastarmes erstrecken, die eine Einheit in Fahrtrichtung gesehen vor dem der Drehpunkt 15″ bzw. 16″ bzw. 17″ bzw. 18″ des Achsschenkels und die andere hinter diesem jeweils endseitig gelenkig angelenkt. Diese Kolben-/Druckzylinder-Einheiten 55, 56 ermöglichen eine starre verblockte Anbindung des Achsschenkels an den angeschlossenen Tastarm oder eine freie Bewegung des Achsschenkels gegenüber dem Tastarm. Dabei wird, in Fahrtrichtung gemäß Pfeil I in Fig. 7 gesehen, die Kolben-/Druckzylinder-Einheit 55 hydraulisch verblockt, die Kolben-/Druckzylinder-Einheit 56 dagegen bleibt frei beweglich. In Fahrtrichtung gemäß Pfeil II gesehen wird die Kolben-/Druckzylinder-Einheit 56 hydraulisch verblockt, während die Kolben-Druckzylinder-Einheit 55 frei beweglich geschaltet ist. Die Sperrung bzw. Freigabe erfolgt über ein zugeordnetes Magnetventil, welches an die hydraulische Druckmittelversorgung 29 angeschlossen ist, und einen hydraulischen Bypass, der die beiden diesseits und jenseits des Kolbens einer Kolben-/Druckzylinder-Einheit sich im Druckzylinder erstreckenden Kammern verbindet, für "Verblockung" absperrt bzw. für "Freischaltung" offenhält. Die acht Magnetventile können ihre Steuerbefehle von der elektronischen Regel- und Steuereinrichtung 31 erhalten. Letztere steuert im Fall gemäß Fig. 7 ebenfalls einen elektro-hyraulischen Steuerblock 51, an dem je Achse 13 bzw. 14 die weiteren hydraulischen Teile der Einrichtung zur Erzeugung des definierten Lenkmomentes angeschlossen sind. Bei diesen Teilen handelt es sich um Kolben-/Druckzylinder-Einheiten 43, 46, die bei diesem Beispiel gleich wie jene gemäß den Beispielen von Fig. 3 bis 6 ausgebildet und auch hier funktionell der jeweiligen Rad-Lenkung zugeordnet sind, d.h., beispielsweise sich zwischen einer gestellfesten Lagerstelle 47 und einem Lager 48 erstrecken, das an einem Hebel 48′ gegeben ist, welcher mit einem Achsschenkel eines Rades der vorderen bzw. hinteren Achse 13 bzw. 14 verbunden ist.

Anstelle der Kolben-/Druckzylinder-Einheiten 55, 56 können auch andere funktionell gleichwirkende Mechanismen, z.B. sperrbare bzw. freigebbare Hebelmechanismen vorgesehen sein.

Die funktionelle Abstimmung zur Hinführung der Räder beider Achsen 13, 14 an die Spurführungsleitschiene 4 bzw. 5 bzw. zur Weglenkung der Räder von letzterer, z.B. für einen Fahrspur-Wechsel, wird von der elektronischen Regel- und Steuereinrichtung 31 durch Ausgabe von Steuerbefehlen an die Einrichtung 51 und besagte Magnetventile, und deren Umsetzung in entsprechende Einzelstellbefehle für die beiden Kolben-/Druckzylinder-Einheiten 43, 46 sowie die acht Kolben-/Druckzylinder-Einheiten 55, 56 geregelt. Im Endergebnis ergibt sich auch in diesem Fall eine Spurführungs-Regelung wie vorstehend anhand der Fig. 3 bis 6 beschrieben.

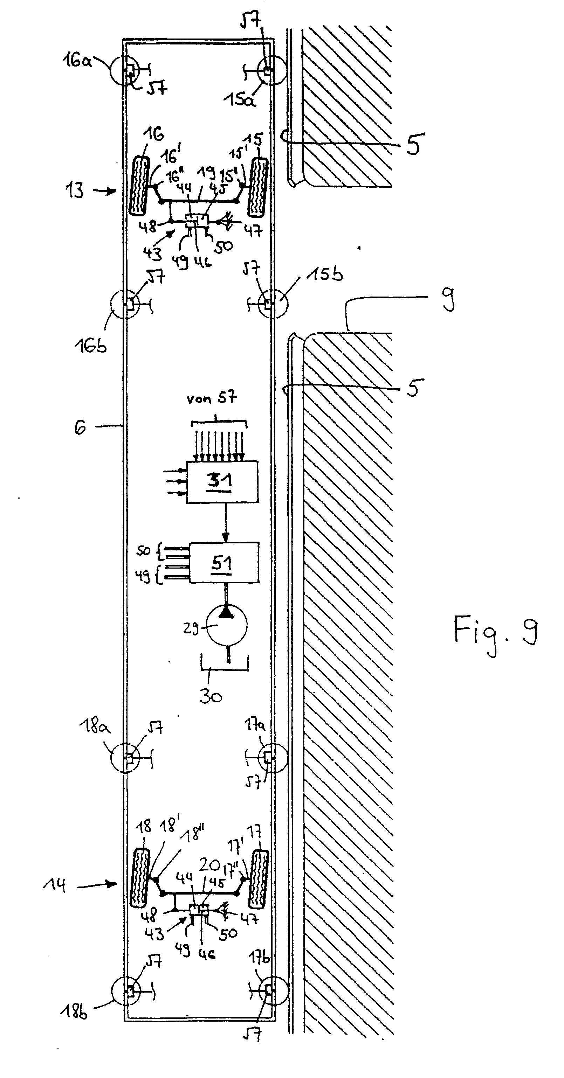

Eine von der Mechanik her gesehen wesentlich weniger aufwendige und im Hinblick auf große Robustheit konzipierte Lösung ist in Fig. 9 dargestellt. In diesem Fall wird auf Tastarme verzichtet. Die Tastrollen 15a, 15b; 16a, 16b; 17a, 17b; 18a, 18b sind vor und hinter dem jeweils zugeörigen Rad 15, 16, 17, 18 ortsfest am Rahmen oder Aufbau des Fahrzeugs gelagert, und zwar in einem Abstand hintereinander, der größer als die Breite der Lücke 8 bzw. 9 in der Spurführungsleitschine 4 bzw. 5 ist, und mit einem nur relativ geringen Überstand über die seitliche Kontur des Fahrzeugs 6 hinaus. Diesen ortsfest gelagerten Tastrollen sind Sensoren 57, z.B. Druckdosen oder Drehmelder, zugeordnet, welche den Berührungskontakt der Tastrollen mit der angesteuerten Spurführungsleitschiene 4 bzw. 5 feststellen und über Signalleitungen an die elektronische Regel- und Steuereinrichtung 31 melden. Diese Regel- und Steuereinrichtung 31 ist ihrem Aufbau und ihrer Wiirkungsweise nach ähnlich jener der vorbeschriebenen Beispiele; sie gibt an die elektrohydraulische Steuereinrichtung 51 dann, wenn ein Berührungskontakt Tastrollen/Spurführungsleitschiene 4 bzw. 5 festgestellt wurde, Befehle für eine solche hydraulische Betätigung der Einrichtung zur Erzeugung eines definierten Lenkmomentes (Steuereinrichtung 51, Druckzylinder 43 mit Druckräumen 44, 45 und Kolben 46 zwischen gestellfestem Lager 47 und Lager 48 am Lenkgestänge 19) aus, daß die Räder 15, 16, 17, 18 grundsätzlich nicht parallel zur Spurführungsleitschiene 4 bzw. 5, sondern unter kleinem lyinkel von beispielsweise 1 - 2° zu letzterer hin angestellt werden und dies für Spurführungsbetrieb bleiben (siehe die leichte Schrägstellung der Räder in Fig. 9). Hierdurch ist sichergestellt, daß die Tastrollen immer mit einer ausreichenden Kraft in Anlagekontakt mit der abgetasteten Spurführungsleitschiene 4 bzw. 5 bleibt.

Dieser automatische Spurführungsbetrieb ist vom Fahrer abschaltbar bzw. unterbrechbar, z.B. wenn die Fahrspur gewechselt und die gegenüberliegende Spurführungsleitwand als Spurführungsorgan angesteuert werden soll. Die vom Fahrer über die Lenkradbewegung gewünschte Steuerung des Fahrzeugs 6 wird von Sensoren erfaßt und der Regel- und Steuereinrichtung 31 gemeldet, die dann die Steuerung der Räder der in Fahrtrichtung gesehen hinteren Achse durch Ausgabe entsprechender Stellbefehle über die Steuereinrichtung 51 an die zugehörige Kolben-Druckzylindereinheit 43, 44, 46 regelt.

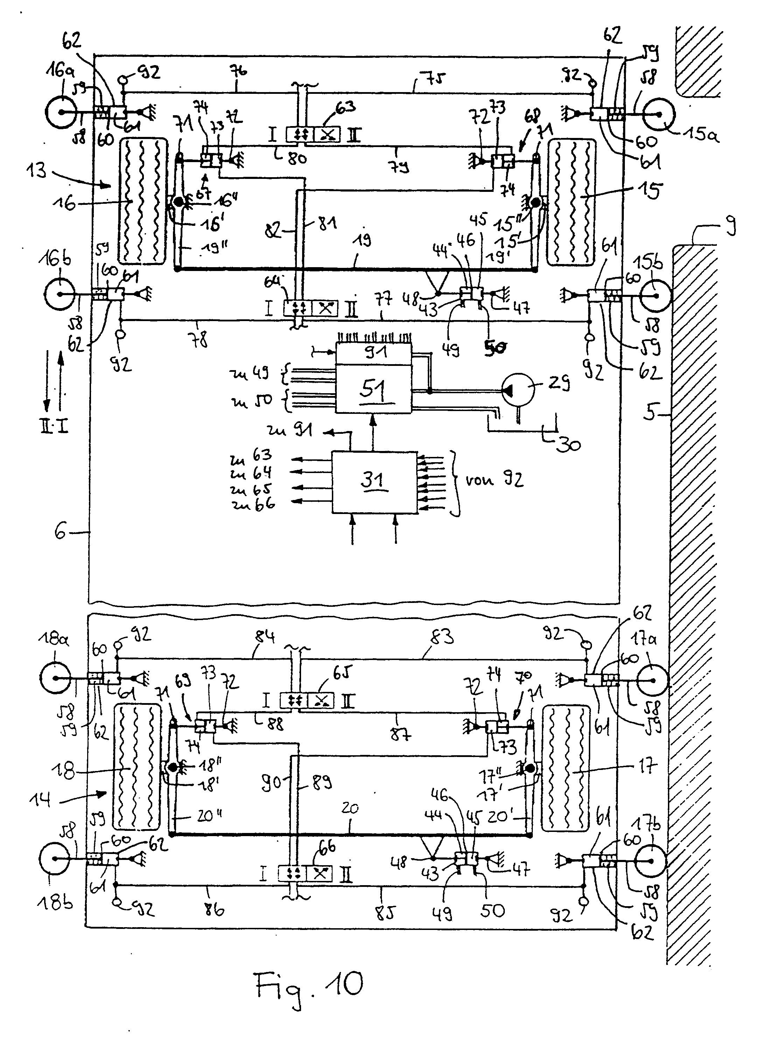

Eine ähnliche einfache, ebenfalls ohne Tastarme auskommende und auch keine ständige Schrägstellung der Räder zur abgetasteten Spurführungsleitschiene 4 bzw. 5 hin erfordernde Lösung ist aus Fig. 10 ersichtlich. In diesem Fall sind die Tastrollen 15a, 15b; 16a, 16b; 17a, 17b; 18a, 18b an quer zur Fahrtrichtung und im wesentlichen senkrecht zu den abzutastenden Spurführungsleitschienen 4 bzw. 5 beweglichen Kolbenstangen 58 drehbar gelagert, welch jede fahrzeugeinwärts durch eine Druckfeder 59 belastet und in Gegenrichtung über einen angeschlossenen Druckkolben 60 permanent mit einem in einem Druckraum 61 bereitgestellten Druck bestimmter, möglichst konstanter Größe beaufschlagt wird. Jeder Druckkolben 60 wirkt in einem auch den zugehörigen Druckraum 61 umfassenden Druckzylinder 62, der ortsfest am Rahmen bzw. dem Aufbau des Fahrzeugs 6 angelenkt befestigt ist.

Die beiden mit Index a und b bezeichneten Tastrollen je Rad 15, 16, 17, 18 sind mittels einer speziellen elektrohydraulischen Steuereinrichtung in jeder Lage gleich stark hydraulisch verblockt, das heißt, jede Tastrolle a eines Tastrollenpaares a/b ist immer mit gegenüber der anderen (b) gleichem hydraulischen Druck beaufschlagt, unabhängig davon, mit welcher Kraft die Tastrollen gegen die abzutastende Spurführungsleitschiene 4 bzw. 5 angedrückt werden.

Die diesbezügliche Steuereinrichtung umfaßt je gelenkter Achse 13 bzw. 14 zwei 4/2-Wege-Schaltventile 63, 64 bzw. 65, 66 und außerdem je zwei Kolben-Druckzylinder-Einheiten 67, 68 bzw. 69, 70 je Achse 13 bzw. 14, welche vorgenannten Bauteile über Druckleitungen in spezieller Weise untereinander und mit den Druckräumen 61 in den Druckzylindern 62 der Tastrollen in Verbindung stehen.

Jedes der 4/2-Wege-Schaltventile 63, 64, 65, 66 kann zwei Schaltstellungen einnehmen, wobei in der ersten Schaltstellung I der erste Eingang zum ersten Ausgang und der zweite Eingang zum zweiten Ausgang durchgeschaltet ist, während in der zweiten Schaltstellung II der erste Eingang zum zweiten Ausgang und der zweite Eingang zum ersten Ausgang durchgeschaltet ist. Die erste Schaltstellung I (siehe die Darstellung gemäß Fig. 10) ist der mit entsprechendem Pfeil I markierten Fahrtrichtung und Abtastung der Spurführungsleitwand 5 zugeordnet, während die zweite Schaltstellung II der entgegengesetzten, durch Pfeil II gekennzeichneten Fahrtrichtung und Abtastung der gegenüberliegenden Spurführungsleitwand 4 zugeordnet ist. Die jeweilige Umschaltung der 4/2-Wege-Schaltventile wird von der elektronischen Regel- und Steuereinrichtung 31 aus initiiert. Letztere ist auch in diesem Beispiel ihrem Aufbau und ihrer Funktion nach ähnlich wie jene der vorhergehenden Ausführungsbeispiele. Die beiden Kolben-Druckzylinder-Einheiten 67, 68 bzw. 69, 70 je Achse 13 bzw. 14 sind jeweils einenendes an einem fest mit dem Achsschenkel 15' bzw. 16' bzw. 17' bzw. 18' des zugehörigen Rades gekoppelten Hebelarm bei 71 und andernendes an einem fahrgestell- bzw. aufbaufesten Lagerpunkt 72 angelenkt. Der Kolben jeder Kolben-Druckzylinder-Einheit 67, 68, 69, 70 trennt innerhalb des zugehörigen Druckzylinders zwei Druckräume, einen inneren (73) und einen äußeren (74) voneinander. Innerhalb der Steuereinrichtung ist folgende druckleitungsmäßige Verknüpfung gegeben, nämlich

1. im Bereich der Achse 13

a) Druckraum 61 hinter Tastrolle 15a über Druckleitung 75 verbunden mit erstem Eingang von 4/2-Wege-Schaltventil 63

b) Druckraum 61 hinter Tastrolle l6a über Druckleitung 76 verbunden mit zweitem Eingang von 4/2-Wege-Schaltventil 63,

c) Druckraum 61 hinter Tastrolle 15b über Druckleitung 77 verbunden mit erstem Eingang von 4/2-Wege-Schaltventil 64,

d) Druckraum 61 hinter Tastrolle 16 b über Druckleitung 78 verbunden mit zweitem Eingang von 4/2-Wege-Schaltventil 64,

e) erster Ausgang 4/2-Wege-Schaltventil 63 über Druckleitung 79 verbunden mit Druckraum 74 von Kolben-Druckzylinder-Einheit 68,

f) zweiter Ausgang 4/2-Wege-Schaltventil 63 über Druckleitung 80 verbunden mit Druckraum 74 von Kolben-Druckzylinder-Einheit 67,

g) erster Ausgang 4/2-Wege-Schaltventil 64 über Druckleitung 81 verbunden mit Druckraum 73 von Kolben-Druckzylinder-Einheit 67,

h) zweiter Ausgang 4/2-Wege-Schaltventil 64 über Druckleitung 82 verbunden mit Druckraum 73 von Kolben-Druckzylinder-Einheit 68,

2. im Bereich der Achse 14

i) Druckraum 61 hinter Tastrolle 17a über Druckleitung 83 verbunden mit erstem Eingang vom 4/2-Wege-Schaltventil 65,

j) Druckraum 61 hinter Tastrolle 18a über Druckleitung 84 verbunden mit zweitem Eingang von 4/2-Wege-Schaltventil 65,

k) Druckraum 61 hinter Tastrolle 17b über Druckleitung 85 verbunden mit erstem Eingang von 4/2-Wege-Schaltventil 66,

l) Druckraum 61 hinter Tastrolle 18b über Druckleitung 86 verbunden mit zweitem Eingang von 4/2-Wege-Schaltventil 66,

m) erster Ausgang 4/2-Wege-Schaltventil 65 über Druckleitung 87 verbunden mit Druckraum 74 von Kolben-Druckzylinder-Einheit 70,

n) zweiter Ausgang 4/2-Wege-Schaltventil 65 über Druckleitung 88 verbunden mit Druckraum 74 von Kolben-Druckzylinder-Einheit 69,

o) erster Ausgang 4/2-Wege-Schaltventil 66 über Druckleitungen 89 verbunden mit Druckraum 73 von Kolben-Druckzylinder-Einheit 69,

p) zweiter Ausgang 4/2-Wege-Schaltventil 66 über Druckleitung 90 verbunden mit Druckraum 73 von Kolben-Druckzylinder-Einheit 70.

Für die Grundbefüllung dieser Leitungswege mit Öl, für die Druckeinregelung in diesen und den angeschlossenen Druckräumen und für die Ölnachladung zum Ausgleich etwaiger Leckageverluste ist ein elektro-hydraulischer Steuerblock 91 vorgesehen, an dem ausgangsseitig die einzelnen Druckleitungen (soweit notwendig) und eingangsseitig die Ölversorgungseinrichtung (Pumpe 29) angeschlossen sind. Zur Druckeinregelung und -überwachung ist jeder der acht Schaltstrecken ein Druckwächter 92 zugeordnet. Diese Druckwächter 92 melden die erfaßten Druckmeßsignale an die elektronische Regel- und Steuereinrichtung 31, welche bei Bedarf ein entsprechendes Schaltorgan im Steuerblock 91 für die nötige ölmengen-und/oder öldruckmäßige Nachsteuerung in der betreffenden Schaltstrecke/Druckraum aktiviert.

Weiterhin ist auch bei diesem Ausführungsbeispiel als Teil der Spurführungseinrichtung eine Einrichtung zur Erzeugung eines definierten Lenkmomentes vorgesehen, mit dem die gelenkten Räder 15, 16, 17, 18 der beiden Achsen 13 bzw. 14 zur jeweils abzutastenden Spurführungsleitschiene 4 bzw. 5 hin gelenkt werden. Diese besteht aus zwei Kolben-Druckzylinder-Einheiten einer je Achse 13 bzw. 14. Jede derselben besteht aus einem Druckzylinder 43 und einem in letzterem zwei Druckräume 44, 45 trennenden Kolben 46 und ist einenendes an einem fahrgestell- bzw. aufbautenfesten Lagerpunkt 47 und andernendes an einem am Lenkgestänge 19 bzw. 20 oder anderen, die Lenkung der Räder je Achse 13 bzw. 14 bewirkenden Organen angelenkt. Die beiden Druckräume 44, 45 je Kolben-Druckzylinder-Einheit 43, 46 stehen über Druckleitungen 49, 50 mit dem elektro-hydraulischen Steuerblock 51 in Verbindung, der gesteuert durch Befehle der elektronischen Regel- und Steuereinrichtung 31 für eine entsprechende Druckbe- oder -entlastung der Druckräume 44, 45 sorgt, wobei die Anpreßkraft der Tastrollen entsprechend eingestellt und nachgeregelt wird.

Im Betrieb ergibt sich dabei folgende Funktion, wobei für die nachfolgende Betrachtung davon ausgegangen wird, daß das Fahrzeug 6 gerade vom Fahrer durch entsprechende Einflußnahme über das Lenkrad in Richtung einer abzutastenden Spurführungsleitschiene 4 bzw. 5 hingelenkt wird und die Spurführungsautomatik aktiviert ist.

Sobald eine der Tastrollen je Fahrzeugseite, die der abzutastenden Spurführungsleitschiene 4 bzw. 5 zugewandt ist, mit letzterer in Berührungskontakt kommt, ergibt sich aufgrund der radial einwärts gerichteten Nachgiebigkeit der betreffenden Tastrolle im angeschlossenen Druckleitungsweg eine Druckerhöhung, die vom Druckwächter 92 festgestellt und an die Regel- und Steuereinrichtung 31 gemeldet wird. Diese bewirkt nun ihrerseits, daß über den Steuerblock 51 und die beiden Kolben-Druckzylinder-Einheiten 43, 46 je Achse 13 bzw. 14 ein gezieltes weiteres Hinlenken der Räder beider Achsen 13 bzw. 14 zur abzutastenden Spurführungsleitschiene 4 bzw. 5 erfolgt, solange, bis von den betreffenden Druckwächtern 92 im Bereich jeder Achse 13 bzw. 14 ein ausreichend hoher Anpreßdruck festgestellt und signalisiert wird. Aufgrund der besonderen Verknüpfung der an der Steuerung beteiligten Organe ergibt sich daher ein Zustand, bei dem einerseits alle Tastrollen einer Fahrzeugseite mit gleicher Kraft an die abzutastende Spurführungsleitschiene 4 bzw. 5 angestellt sind, andererseits aber die beiden Tastrollen je Rad gegenseitig entsprechend verblockt sind, mit der Folge, daß jede Tastrolle beim Passieren einer Lücke 8 bzw. 9 in der Spurführungsleitschiene 4 bzw. 5 sich nicht nach außen bewegt, sondern ihre vorher im Tastbetrieb gegebene Position beibehält.

Die Aufhebung diesem Spurführungsbetriebes, z.B. für einen Fahrspurwechsel, erfolgt in ähnlicher bzw. identischer Weise wie in den anderen Ausführungsvarianten.

Im Ergebnis ist somit bei allen Alternativ-Lösungen sichergestellt, daß ein Fahrzeug 6 in allen Fahrsituationen, also auch beim Passieren von in der Spurführungsleitschiene 4 bzw. 5 gegebenen Lücken, mit den Rädern beider Achsen 13, 14 immer in richtigem Abstand und in richtigem Winkel zur Spurführungsleitschiene 4 bzw. 5 geführt ist und außerdem auch ein Fahrspurwechsel wegen der sehr variablen Einflußnahme auf die Rad-Lenkung schnell und exakt ausführbar ist.

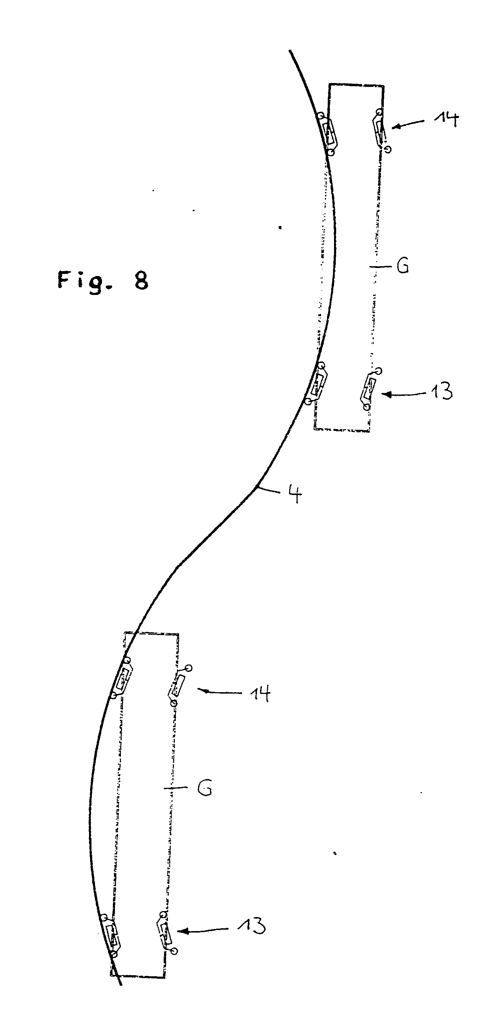

Die erfindungsgemäße Spurführungseinrichtung macht es darüber hinaus möglich, daß - wie aus Fig. 8 ersichtlich - trotz der Länge eines Fahrzeuges 6 auch sehr enge Kurven mit exakt spurgeführter vorderer und hinterer Achse 13 bzw. 14 durchfahren werden können, was sich zum Beispiel in Wendeschleifen, wegen des für diese geringeren Platzbedarfes, als sehr vorteilhaft erweist.

**Ansprüche**

1. Spurführungseinrichtung für ein auf einer Trasse (1) einseitig entlang einer von Lücken (8, 9) definierter Breite unterbrochenen Spurführungsleitschiene (4, 5) durch Tastrollen hochgenau führbares, gummibereiftes Fahrzeug, das in beiden Richtungen - vorwärts, rückwärts - mit vergleichbaren Verhältnissen betreibbar ist und eine jeweils gelenkte Vorder- und Hinterachse hat, wobei die Spurführungseinrichtung auch beim Passieren von Lücken (8, 9) in der Spurführungsleitschiene (4, 5) eine exakte Lenkung des Fahrzeuges (6) durch die Kombination folgender Merkmale sicherstellt, nämlich,

a) jedem gelenkten Rad (15, 16, 17, 18) sind zwei Tastrollen (15a, 15b; 16a, 16b; 17a, 17b; 18a, 18b) zugeordnet, die jeweils an einem Tastarm (15c, 15d; 16c, 16d; 17c, 17d; 18c, 18d), der eine definierte Elastizität aufweist, gelagert sind, in einem Abstand hintereinander, der größer als die Breite der Lücken (8, 9) in der Spurführungsleitschiene (4 bzw. 5) ist,

b) eine Einrichtung zur Koordination der notwendigen gegensinnigen oder gleichsinnigen Lenkbewegungen der Räder beider gelenkter Achsen (13, 14), und

c) eine Einrichtung, mit der im Spurführungsbetrieb an jeder gelenkten Achse (13, 14) ein definiertes Lenkmoment zur Hinführung der Räder in Richtung der abzutastenden Spurführungsleitschiene (4 bzw. 5) erzeugbar ist.

2. Spurführungseinrichtung nach Anspruch 1, dadurch gekennzeichnet, daß die Einrichtung gemäß Teilmerkmal b) durch ein Verbindungsgestänge (21; 21a, 21b) und Mittel zur Veränderung von dessen wirksamer Länge gebildet ist, wodurch die Lenkkinematik der beiden gelenkten Achsen (13, 14) den Gegebenheiten der befahrenen Trasse, also einer Geradeaus- oder Kurvenfahrt, oder sich ändernden Fahrsituationen, wie erforderliche Fahrspurwechsel, angepaßt wird, dergestalt, daß die Räder beider gelenkter Achsen (13, 14) gleichsinnig durch Paralleleinschlag zur Spurführungsleitschiene (4 bzw. 5) hin gelenkt werden.

3. Spurführungseinrichtung nach Anspruch 2, dadurch gekennzeichnet, daß das Verbindungsgestänge (21) aus zwei zueinander fluchtenden geraden Stangen (21a, 21b) besteht, die eine diagonale Lenkverbindung zwischen den Achsschenkeln (15′, 18′) zweier einander diagonal gegenüberliegender Räder (15, 18) an beiden Achsen (13, 14) herstellen, jeweils an einem, am äußeren Ende eines am jeweiligen Achsschenkel (15′, 18′) angeordneten Hebels gegebenen Gelenk (15″, 18″) angelenkt und an ihren einander zugewandten Enden mit innerhalb von hydraulischen Druckzylindern (22, 23) je zwei Druckräume (22a, 22b, bzw. 23a, 23b) voneinander trennenden Kolben (21c, 21d) bestückt sind, welche Druckräume an einen hydraulischen Steuerblock (24) angeschlossen und über diesen gezielt druckbelastbar, entlastbar bzw. absperrbar sind.

4. Spurführungseinrichtung nach Anspruch 3, dadurch gekennzeichnet, daß für die gezielte Be- oder Entlastung oder Absperrung jedes Druckraumes (22a, 22b bzw. 23a, 23b) innerhalb des Steuerblockes (24) entsprechend zugeordnete Ventileinrichtungen vorhanden sind, und daß die Steuerung dieser Ventileinrichtungen durch eine Regel- und Steuerelektronik (31) erfolgt.

5. Spurführungseinrichtung nach den Ansprüchen 2 bis 4, dadurch gekennzeichnet, daß eine der beiden Stangen (21a bzw. 21b) des Verbindungsgestänges (21) in zwei Teile (21b', 21b") unterteilt ist, die beide an einer Schwinghebelkulisse (32) angelenkt sind, und zwar das eine Stangenteil (21b') in einem einenendes der Schwinghebelkulisse (32) gegebenen Drehgelenk (33) und das andere Stangenteil (21b") mit einem Kulissenstein (34) in einer längsschlitzförmigen Kulisse (35), die sich längs der selbst etwa in der Mitte ihrer Längsandehnung schwenkbar an einem fahrgestellfesten Lager (36) angelenkten Schwinghebelkulisse (32) erstreckt, und daß am Stangenteil (21b") eine zu dessen Verschwenkung dienende Verstelleinrichtung angreift.

6. Spurführungseinrichtung nach Anspruch 5, dadurch gekennzeichnet, daß die besagte Verstelleinrichtung aus einer Kolben-/Druckzylinder-Einheit besteht, die einenendes an einem gestellfesten Lager, andernendes am Stangenteil (21b") gelenkig angeschlossen ,ist, wobei der Kolben (37) im Druckzylinder (38) zwei Druckräume (39, 40) voneinander trennt, die zur gezielten Be- und Entlastung bzw. Absperrung an eine hydraulische Steuereinheit angeschlossen sind.

7. Spurführungseinrichtung nach den Ansprüchen 1 bis 6, dadurch gekennzeichnet, daß die beiden je Rad (15, 16, 17, 18) vorgesehenen Tastarme (15c, 15d bzw. 16c, 16d bzw. 17c, 17d bzw. 18c, 18d) jeweils einzeln am jeweiligen Achsschenkel (15' bzw. 16' bzw. 17' bzw. 18') und so angeordnet sind, daß die eine Tastrolle in Fahrtrichtung gesehen vor dem Rad und die andere Tastrolle nach dem Rad angeordnet ist.

8. Spurführungseinrichtung nach den Ansprüchen 1 bis 6, dadurch gekennzeichnet, daß die beiden je Rad (15, 16, 17, 18) vorgesehenen Tastarme (15c, 15d bzw. 16c, 16d bzw. 17c, 17d bzw. 18c, 18d) miteinander verbunden und so am jeweiligen Achsschenkel (15' bzw. 16' bzw. 17' bzw. 18') angeordnet sind, daß die Tastrollen (15a, 15b bzw. 16a, 16b) der einen Achse (13) in einer Fahrtrichtung gesehen vor dieser Achse (13) und die der anderen Achse (14) zugeordneten Spurführungsrollen (17a, 17b bzw. 18a, 18b) in der selben Fahrtrichtung gesehen hinter dieser Achse (14) angeordnet sind.

9. Spurführungseinrichtung nach Anspruch 8, dadurch gekennzeichnet, daß die jeweils äußersten Tastrollen (15a, 16a, 17b, 18b) an teleskopisch ausfahrbaren bzw. einziehbaren Tastarmen (15c, 16c, 17c, 18c) angeordnet sind.

10. Spurführungseinrichtung nach Anspruch 1, dadurch gekennzeichnet, daß je Rad (15, 16, 17, 18) zwei nach Art von Winkelhebeln ausgebildete, je eine Tastrolle tragende Tastarme (15c, 15d bzw. 16c, 16d bzw. 17c, 17d bzw. 18c, 18d) vorgesehen sind, wobei je Tastarm sich dessen einer Armteil in Fahrtrichtung gesehen vor bzw. hinter dem Rad senkrecht oder schräg zur Spurführungsleitschiene (4, 5) erstreckt, während der andere, hierzu abgewinkelte Armteil das Rad hintergreifend sich hinter dem Achsschenkel beabstandet von diesem etwa quer zur Radachse verlaufend und so erstreckt, daß ein gewisser Abstand zum benachbarten Armteil des anderen Tastarmes gegeben ist, daß ferner jeder dieser beiden Tastarme an seinem inneren Ende an einem fahrgestellseitigen Gelenk (15e, 15f bzw. 16e, 16f bzw. 17e, 17f bzw. 18e, 18f) angelenkt ist und im Bereich des inneren Armteils durch einen Verbindungshebel (54) gelenkig am gegenüberliegenden Armteil des anderen Tastarmes angekoppelt ist, und daß jeder Tastarm mit dem Achsschenkel (15' bzw. 16' bzw. 17' bzw. 18') des zugehörigen Rades durch eine Einrichtung gelenkig verbunden ist, die eine starre verblockte Anbindung des Achsschenkels an den jeweiligen Tastarm oder eine freie Bewegung des Achsschenkels gegenüber dem Tastarm ermöglicht.

11. Spurführungseinrichtung nach Anspruch 10, dadurch gekennzeichnet, daß die besagte Einrichtung durch eine Kolben-/Druckzylinder-Einheit (55 bzw. 56) gebildet ist, der zur Steuerung ein Magnetventil zugeordnet ist, welches an eine hydraulische Druckmittelversorgung (29) angeschlossen ist, und einen hydraulischen Bypass, der die beiden diesseits und jenseits des Kolbens sich erstreckenden Kammern im Druckzylinder verbindet, für "Verblockung" absperrt bzw. für "Freigabe" offenhält.

12. Spurführungseinrichtung nach Anspruch 11, dadurch gekennzeichnet, daß die Magnetventile ihre Steuerbefehle von einer elektronischen Regel- und Steuereinrichtung (31) erhalten.

13. Spurführungseinrichtung nach den Ansprüchen 1 bis 9, dadurch gekennzeichnet, daß die Einrichtung zur Erzeugung eines definierten Lenkmomentes aus einer Kolben-/Druckzylinder-Einheit mit einem Druckzylinder (43) und einem in letzterem zwei Druckräume (44, 45) voneinander trennenden Kolben (46) besteht, wobei eines der beiden Teile (43, 46) an einem gestellfesten Lager (47) und das andere der beiden Teile (43, 46) an einem Lager (48) angelenkt ist, das an einem bewegungsmäßig fest an einem Achsschenkel eines der vier gelenkten Räder angeordneten Organ (48'), wie Hebel, Pfeiler oder dergleichen, gegeben

11

ist.

14. Spurführungseinrichtung nach den Ansprüchen 1, 10, 11 und 12, dadurch gekennzeichnet, daß jeder gelenkten Achse (13 bzw. 14) als Teil der Einrichtung zur Erzeugung eines definierten Lenkmomentes eine Kolben-/Druckzylinder-Einheit mit einem Druckzylinder (43) und einem in letzterem zwei Druckräume (44, 45) voneinander trennenden Kolben (46) zugeordnet ist, wobei eines der beiden Teile (43, 46) an einem gestellfesten Lager (47) und das andere der beiden Teile (43, 46) an einem Lager (48) angelenkt ist, das außen am einen fest mit dem Achsschenkel eines Rades der zugehörigen Achse (13 bzw. 14) verbundenen Hebel (48′) gegeben ist.

15. Spurführungseinrichtung nach den Ansprüchen 13 und 14, dadurch gekennzeichnet, daß die Druckräume (44, 45) der Kolben-/Druckzylinder-Einheit(en) (43, 46) über Druckleitungen an einen hydraulischen Steuerblock (51) mit internen Ventileinrichtungen angeschlossen sind, der an eine Druckmittelversorgung (29) angeschlossen und über eine Rücklaufleitung mit einem Vorratstank (30) in Verbindung steht und seine Steuerbefehle von einer elektronischen Regel- und Steuereinrichtung (31) erhält.

16. Spurführungseinrichtung nach Anspruch 15, dadurch gekennzeichnet, daß die Regel- und Steuereinrichtung (31) gegebenenfalls Signale berücksichtigt, die ihr von Abstandssensoren (53), welche Lücken (8, 9) in der Spurführungsleitschiene (4 bzw. 5) erkennen, oder von an den Tastarmen gegebenen Kraftmeßfühlern, die die Beanspruchung der Tastarme erfassen, oder von Drehzahlmeldern, die die Rotation der Tastrollen erfassen, gemeldet werden.

17. Spurführungseinrichtung für ein auf einer Trasse (1) einseitig entlang einer von Lücken (8, 9) definierter Breite unterbrochenen Spurführungsleitschiene (4, 5) durch Tastrollen hochgenau führbares, gummibereiftes Fahrzeug, das in beiden Richtungen - vorwärts, rückwärts - mit vergleichbaren Verhältnissen betreibbar ist und eine jeweils gelenkte Vorder- und Hinterachse hat, wobei die Spurführungseinrichtung auch beim Passieren von Lücken (8, 9) in der Spurführungsleitschiene (4 bzw. 5) eine exakte Lenkung des Fahrzeuges durch die Kombination folgender Merkmale sicherstellt, nämlich

a) jedem gelenkten Rad (15, 16, 17, 18) sind je zwei Tastrollen (15a, 15b; 16a, 16b; 17a, 17b; 18a, 18b) zugeordnet, ortsfest am Fahrzeug (6) gelagert und in einem Abstand hintereinander, der größer als die Breite einer Lücke (8 bzw. 9) in der Spurführungsleitschiene (4 bzw. 5) ist,

b) eine Einrichtung zur Koordination der notwendigen gegensinnigen oder gleichsinnigen Lenkbewegungen der Räder beider gelenkter Achsen (13, 14), und

c) eine Einrichtung, mit der im Spurführungsbetrieb bei Anlage der Tastrollen an der abzutastenden Spurführungsleitschiene (4 bzw. 5) ein definiertes Lenkmoment durch leichte Schrägstellung der Räder (15, 17 bzw. 16, 18) zur abgetasteten Spurführungsleitschiene (4 bzw. 5) hin erzeugt wird.

18. Spurführungseinrichtung nach Anspruch 17, dadurch gekennzeichnet, daß den ortsfest gelagerten, die Peripherie des Fahrzeugs (6) seitlich nur geringfügig überragenden Tastrollen Sensoren (57), z.B. Druckdosen oder Drehmelder, zugeordnet sind, welche einen Berührungskontakt der Tastrollen mit der abzutastenden Spurführungsleitschiene (4 bzw. 5) feststellen und an eine elektronische Regel- und Steuereinrichtung (31) melden, die bei gemeldetem Berührungskontakt Befehle an eine elektrohydraulische Steuereinrichtung (51) für eine solche hydraulische Betätigung von weiteren Teilen der Einrichtung zur Erzeugung eines definierten Lenkmomentes - Druckzylinder (43) mit Druckräumen (44, 45) und Kolben (46) zwischen gestellfestem Lager (47) und Lager (48) am Lenkgestänge (19) des Fahrzeuges - abgibt, daß die Räder (15, 16, 17, 18) nicht parallel zur abgetasteten Spurführungsleitschiene (4 bzw. 5), sondern unter kleinem Winkel von ca. 1 bis 2° zu letzterer hin angestellt werden und im Spurführungsbetrieb auch bleiben.

19. Spurführungseinrichtung nach Anspruch 18, dadurch gekennzeichnet, daß die elektrohydraulische Steuereinrichtung (51) an eine Ölversorgungseinrichtung (29, 30) angeschlossen ist.

20. Spurführungseinrichtung für ein auf einer Trasse (1) einseitig entlang einer von Lücken (8, 9) definierter Breite unterbrochenen Spurführungsleitschine (4, 5) durch Tastrollen hochgenau führbares, gummibereiftes Fahrzeug, das in beiden Richtungen - vorwärts, rückwärts - mit vergleichbaren Verhältnissen betreibbar ist und eine jeweils gelenkte Vorder- und Hinterachse hat, wobei die Spurführungseinrichtung auch beim Passieren von Lücken (8, 9) in der Spurführungsleitschine (4, 5) eine exakte Lenkung des Fahrzeuges (6) durch die Kombination folgender Merkmale sicherstellt, nämlich,

a) jedem gelenkten Rad (15′ 16, 17, 18) sind je zwei Tastrollen (15a, 15b; 16a, 16b; 17a, 17b; 18a, 18b) zugeordnet, in einem gegenseitigen Abstand hintereinander, der größer als die Breite einer Lücke (8 bzw. 9) in der Spurführungsleitschiene (4 bzw. 5) ist, und jeweils an einer quer zur Fahrtrichtung auslenkbaren Kolbenstange (5, 8) drehbar gelagert, die entgegen einer definierten, fahrzeugeinwärts gerichteten Kraft hydraulisch mit gleicher Gegenkraft verblockt ist, wie die andere Tastrolle des betreffenden Tastrollenpaares,

b) eine Einrichtung zur Koordination der not-

wendigen gegensinnigen oder gleichsinnigen Lenk-bewegungen der Räder beider gelenkter Achsen (13, 14), und

c) eine Einrichtung, mit der im Spurführungsbetrieb an jeder gelenkten Achse (13, 14) ein definiertes Lenkmoment zur Hinführung der Räder in Richtung der abzutastenden Spurführungsleitschiene (4 bzw. 5) erzeugbar ist.

21. Spurführungseinrichtung nach Anspruch 20, dadurch gekennzeichnet, daß jede, eine Tastrolle lagernde Kolbenstange (58) fahrzeugeinwärts durch eine Druckfeder (59) belastet, in Gegenrichtung dagegen über einen angeschlossenen Druckkolben (60) permanent mit einem in einem Druckraum (61) bereitgestellten Druck bestimmter Größe beaufschlagt wird, welcher Druckkolben (60) in einem auch den zugehörigen Druckraum (61) umfassenden Druckzylinder (62) wirkt, der ortsfest am Fahrzeug (6) angelenkt ist.

22. Spurführungseinrichtung nach Anspruch 21, dadurch gekennzeichnet, daß eine spezielle elektrohydraulische Steuereinrichtung vorgesehen ist, mit der die beiden Tastrollen eines je einem Rad (15, 16, 17, 18) zugeordneten Tastrollen-Paares in jeder Lage gleich stark, also mit gleichem hydraulischen Druck und unabhängig davon, mit welcher Kraft die Tastrollen gegen die abzutastende Spurführungsleitschiene (4 bzw. 5) angedrückt sind, verblockt sind.

23. Spurführungseinrichtung nach Anspruch 22, dadurch gekennzeichnet, daß die besagte elektrohydraulische Steuereinrichtung je gelenkter Achse (13 bzw. 14) zwei 4/2-Wege-Schaltventile (63, 64 bzw. 65 66) sowie zwei KolbenDruckzylinder-Einheiten (67, 68 bzw. 69, 70) aufweist, welche besagten Bauteile über Druckleitungen in spezieller Weise untereinander und mit den Druckräumen (61) in den Druckzylindern (62) in Verbindung stehen.

24. Spurführungseinrichtung nach Anspruch 23, dadurch gekennzeichnet, daß jedes der 4/2-Wege-Schaltventile (63, 64 bzw. 65, 66) zwei Schaltstellungen einnehmen kann, wobei jeweils in der ersten Schaltstellung, die einer ersten Fahrtrichtung zugeordnet ist, der erste Eingang zum ersten Ausgang und der zweite Eingang zum zweiten Ausgang durchgeschaltet ist, während in der jeweils zweiten, der entgegengesetzten Fahrtrichtung zugeordneten Schaltstellung der erste Eingang zum zweiten Ausgang und der zweite Eingang zum ersten Ausgang durchgeschaltet ist, und daß die jeweilige Umschaltung der 4/2-Wege-Schaltventile von einer elektronischen Regel- und Steuereinrichtung (31) aus initiiert wird.

25. Spurführungseinrichtung nach Anspruch 23, dadurch gekennzeichnet, daß die beiden je Achse (13 bzw. 14) gegebenen Kolben-Druckzylinder-Einheiten (67, 68 bzw. 69, 70) jeweils einenendes an einem fest mit dem Achsschenkel (15' bzw. 16'

bzw. 17' bzw. 18') des zugehörigen Rades (15, 16 bzw. 17, 18) gekoppelten Hebelarm (71) und andernendes an einem fahrgestell- bzw. aufbaufesten Lagerpunkt (72) angelenkt sind, und daß der Kolben jeder Kolben-Druckzylinder-Einheit innerhalb des zugehörigen Druckzylinders zwei Druckräume, einen inneren (73) und einen äußeren (74), voneinander trennt.

26. Spurführungseinrichtung nach den Ansprüchen 22 bis 24, dadurch gekennzeichnet, daß innerhalb der besagten elektro-hydraulischen Steuer-einrichtung folgende druckleitungsmäßige Verknüp-fung gegeben ist, nämlich

A. im Bereich der Achse (13)

a) Druckraum (61) hinter Tastrolle (15a) über Druckleitung (75) verbunden mit erstem Eingang von 4/2-Wege-Schaltventil (63),

b) Druckraum (61) hinter Tastrolle (16a) über Druckleitung (76) verbunden mit zweitem Eingang von 4/2-Wege-Schaltventil (63),

c) Druckraum (61) hinter Tastrolle (15b) über Druckleitung (77) verbunden mit erstem Eingang von 4/2-Wege-Schaltventil (64),

d) Druckraum (61) hinter Tastrolle (16b) über Druckleitung (78) verbunden mit zweitem Eingang von 4/2-Wege-Schaltventil (64),

e) erster Ausgang 4/2-Wege-Schaltventil (63) über Druckleitung (79) verbunden mit Druckraum (74) von Kolben-Druckzylinder-Einheit (68),

f) zweiter Ausgang 4/2-Wege-Schaltventil (63) über Druckleitung (80) verbunden mit Druckraum (74) von Kolben-Druckzylinder-Einheit (67),

g) erster Ausgang 4/2-Wege-Schaltventil (64) über Druckleitung (81) verbunden mit Druckraum (73) von Kolben-Druckzylinder-Einheit (67),

h) zweiter Ausgang 4/2-Wege-Schaltventil (64) über Druckleitung (82) verbunden mit Druckraum (73) von Kolben-Druckzylinder-Einheit (68),

B. im Bereich der Achse (14)

i) Druckraum (61) hinter Tastrolle (17a) über Druckleitung (83) verbunden mit erstem Eingang vom 4/2-Wege-Schaltventil (65),

j) Druckraum (61) hinter Tastrolle (18a) über Druckleitung (84) verbunden mit zweitem Eingang von 4/2-Wege-Schaltventil (65),

k) Druckraum (61) hinter Tastrolle (l7b) über Druckleitung (85) verbunden mit erstem Eingang von 4/2-Wege-Schaltventil (66),

l) Druckraum (61) hinter Tastrolle (18b) über Druckleitung (86) verbunden mit zweitem Eingang von 4/2-Wege-Schaltventil (66),

m) erster Ausgang 4/2-Wege-Schaltventil (65) über Druckleitung (87) verbunden mit Druckraum (74) von Kolben-Druckzylinder-Einheit (70),

n) zweiter Ausgang 4/2-Wege-Schaltventil (65) über Druckleitung (88) verbunden mit Druckraum (74) von Kolben-Druckzylinder-Einheit (69),

o) erster Ausgang 4/2-Wege-Schaltventil

(66) über Druckleitungen (89) verbunden mit Druckraum (73) von Kolben-Druckzylinder-Einheit (69), und

p) zweiter Ausgang 4/2-Wege-Schaltventil (66) über Druckleitung (90) verbunden mit Druckraum (73) von Kolben-Druckzylinder-Einheit (70).

27. Spurführungseinrichtung nach den Ansprüchen 20 bis 26, dadurch gekennzeichnet, daß für die Grundbefüllung besagter Leitungswege mit Öl, für die Druckeinregelung in diesen und den angeschlossenen Druckräumen und für die Ölnachladung zum Ausgleich etwaiger Leckageverluste ein elektrohydraulischer Steuerblock (91) vorgesehen ist, an dem eingangsseitig eine Ölversorgungseinrichtung, z.B. Pumpe (29) mit Tank (30), und ausgangsseitig die einzelnen Druckleitungen - soweit notwendig - angeschlossen sind.

28. Spurführungseinrichtung nach Anspruch 26, dadurch gekennzeichnet, daß jeder der acht Schaltstrecken zur Druckeinregelung und Drucküberwachung ein Druckwächter (92) zugeordnet ist, und daß diese Druckwächter die erfaßten Druckmeßsignale an die elektronische Regel- und Steuereinrichtung (31) melden, welche bei Bedarf ein entsprechendes Schaltorgan im Steuerblock (91) für die nötige ölmengenmäßige und/oder öldruckmäßige Nachsteuerung in der betreffenden Schaltstrecke/Druckraum aktiviert.

29. Spurführungseinrichtung nach Anspruch 20, dadurch gekennzeichnet, daß die Einrichtung zur Erzeugung eines definierten Lenkmomentes, mit dem die Räder (15, 16 bzw. 17, 18) der beiden Achsen (13 bzw. 14) zur jeweils abzutastenden Spurführungsleitschiene (4 bzw. 5) hingelenkt werden, pro Achse (13 bzw. 14) je eine Kolben-Druck-Zylinder-Einheit umfaßt, die aus je einem Druckzylinder (43) und einem in letzterem zwei Druckräume (44, 45) voneinander trennenden Kolben (46) besteht sowie einenendes an einem fahrgestell- bzw. aufbaufesten Lagerpunkt (47) und andernendes an einem am Lenkgestänge 19 bzw. 20 oder anderen, die Lenkung der Räder bewirkenden Organ bei Lagerstelle (48) angelenkt ist, und daß die beiden Druckräume (44, 45) je Kolben-Druckzylinder-Einheit (43, 46) über Druckleitungen (49, 50) mit einem elektrohydraulischen Steuerblock (51) in Verbindung stehen, der an die Ölversorgungseinrichtung (29, 30) angeschlossen ist und dessen Schaltorgane durch Befehle der Regel- und Steuereinrichtung (31) für eine entsprechende Druckbe- oder entlastung der Druckräume (44, 45) aktivierbar sind, wodurch die Anpreßkraft der Tastrollen an die abgetastete Spurführungsleitschiene (4 bzw. 5) entsprechend eingestellt bzw. nachgeregelt wird.

30. Spurführungseinrichtung nach einem oder mehreren der vorhergehenden Ansprüche, dadurch gekennzeichnet, daß die Regel- und Steuereinrichtung (31) durch einen Rechner gebildet ist, der Ein- und Ausgabe-Einheiten, Signalwandler und -aufbereitungseinheiten, Datenspeicher, Programmspeicher und einen Mikroprozessor (CPU), verknüpft miteinander über Datenübertragungskanäle aufweist, und daß diese Regel- und Steuereinrichtung (31) die erforderlichen Maßnahmen zur Koordination der notwendigen gegensinnigen oder gleichsinnigen Lenkbewegungen sowie zur Erzeugung eines definierten Lenkmomentes anhand erfaßter und ihr zugeführter Daten per Programm errechnet und entsprechende Befehle an die angeschlossenen Steuerorgane ausgibt.

Fig. 1

Fig. 2

EP 0 384 105 A1

Fig. 3

Fig. 4

EP 0 384 105 A1

7.2610F.c

Fig. 5

Fig. 6

Fig. 7

EP 0 384 105 A1

Fig. 8

Fig. 9

7.2610F.h

Fig. 10

| Europäisches Patentamt | EUROPÄISCHER RECHERCHENBERICHT | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-2636656 (DAIMLER-BENZ AKTIENGESELLSCHAFT) <br> * das ganze Dokument * | 1, 2, 5, 17 | B62D1/26 |
| A | | 7 | |
| | --- | | |
| Y | GB-A-1222610 (HUNSLET LIMITED) <br> * Seite 1, Zeilen 13 - 44; Ansprüche 1-4; Figur * | 1, 2, 5, 17 | |
| A | | 6, 13-15 | |
| | --- | | |
| A,P | PATENT ABSTRACTS OF JAPAN <br> vol. 13, no. 573 (M-909)(3921) 19 Dezember 1989, <br> & JP-A-1 240376 (HINO MOTORS LTD) 25 September 1989, <br> * das ganze Dokument * | 3, 4, 18, 19, 27, 30 | |
| | --- | | |
| A | EP-A-7788 (LANSING BAGNALL LIMITED) <br> * Zusammenfassung; Figur 1 * | 8 | |
| | --- | | |
| A | GB-A-2154525 (DAIMLER-BENZ AKTIENGESELLSCHAFT) <br> * Zusammenfassung; Figuren 1-3 * | 9 | |
| | --- | | RECHERCHIERTE SACHGEBIETE (Int. Cl.5 ) |
| A | FR-A-2421093 (DAIMLER-BENZ AKTIENGESELLSCHAFT) <br> * Ansprüche 1, 3; Figuren 2-4 * | 10, 11, 20, 22 | |
| | --- | | B62D |
| A | MACHINE DESIGN. <br> vol. 55, no. 13, Juni 1983, CLEVELAND US <br> Seiten 84 - 85; Hubertus Christ: <br> "Buses on tracks make multi-purpose transit system" <br> * Seite 85, rechte Spalte; Figur 1 * | 16, 18 | |
| | --- | | |
| A | DE-A-2806077 (DAIMLER-BENZ AKTIENGESELLSCHAFT) <br> * Anspruch 1; Figur 2 * | 16, 21 | |
| | --- | | |
| A | FR-A-2163137 (LTV AEROSPACE CORPORATION) <br> * Anspruch 1; Figuren 1, 2 * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 25 MAI 1990 | MYON G.J-P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument

EPO FORM 1503 03.82 (P0403)